# EUROPÄISCHE PATENTSCHRIFT

(11) **EP 2 767 153 B1**
(45) Veröffentlichungstag und Bekanntmachung des Hinweises auf die Patenterteilung: **05.12.2018**
(21) Anmeldenummer: 14166836.8
(22) Anmeldetag: 19.08.2003
(51) Int. Cl.: A01F 15/07

(54) **Rundballenpresse**
Round baling press
Presse à balles rondes

(30) Priorität: 18.09.2002 DE 10243294
(43) Veröffentlichungstag der Anmeldung: 20.08.2014
(62) Teilanmeldung aus: 03018809.8
(73) Patentinhaber: Forage Company B.V., 3147 PB Maassluis (NL)
(72) Erfinder: Rodewald, Peter, 3147 PA Maassluis (NL)
(74) Vertreter: AGCO Intellectual Property Department

(56) Entgegenhaltungen:
- DE-A1- 3 418 681
- DE-A1- 3 617 155
- DE-A1- 10 045 842
- US-A- 5 129 207
- US-A- 5 433 059
- US-A1- 2002 046 552

## Beschreibung

Die Erfindung betrifft eine Rundballenpresse, deren Pressraum umfangsseitig durch umlaufende Presselemente gebildet wird, mit wenigstens einer ein Vorzugswalzenpaar aufweisenden Umhüllvorrichtung zum Umhüllen eines Rundballens mit Umhüllmaterial, das mittels wenigstens eines weiteren antreibbaren Zuführelementes durch einen Einführspalt im Pressraum in diesen einführbar ist.

Je nach Einsatzzweck der Rundballenpresse stehen unterschiedliche Umhüllmaterialien zur Verfügung. Bindegarn ist kostengünstiger als Netzbahnen, hat aber den Nachteil längerer Umhüllzeiten, weshalb Netzbindungen in jüngster Zeit zunehmende Verbreitung finden. Bei Rundballenpressen mit Presswalzen wird die Netzbahn durch einen durch zwei benachbarte Presselemente gebildeten Einführspalt in den Pressraum eingeführt. Eine derartige Rundballenpresse ist beispielsweise aus der DE U1 8327172.4 bekannt. Hierbei ist benachbart zu einer Netzumhüllvorrichtung eine Garnumhüllvorrichtung angeordnet, so dass entweder Netz oder Garn wahlweise durch einen einzigen Einführspalt in den Pressraum einführbar ist. Nachteilig ist hierbei, dass sich während des Pressvorganges aufgewirbeltes Kurzgut (Strohkleinteilchen) und Staub im Bereich der Umhüllvorrichtungen absetzt und den Startvorgang, d. h. die Zuführung des Bindemittels erschwert oder verhindert. Es ist bereits versucht worden, die Materialanhäufungen mit Druckluft zu beseitigen, was jedoch relativ hohen Aufwand bedeutet.

Rundballenpressen mit variablem Pressraum und Riemen als Förder- und Presseinrichtung, siehe beispielsweise DE- A1-19851470 haben sich im praktischen Einsatz auch bei kritischem Material wie sehr trockenem, sprödem Gerstenstroh erfolgreich bewährt. Aufgrund des Presssystems steht hier praktisch nur ein Einführspalt für das Umhüllmaterial zur Verfügung, d. h. entweder können die Umhüllvorrichtungen im gestellfesten Vordergehäuse oberhalb des Aufsammlers angeordnet sein oder im unteren Bereich des aufklappbaren Hintergehäuses. Bei der Anordnung der Umhüllvorrichtungen im Vordergehäuse kommt es bei bestimmten Materialien zu verstärkten Materialansammlungen, weil die Umlenkrolle des Pressriemens oberhalb des Einführspalts Material nach außen entgegen der Zuführrichtung des Umhüllmaterials hinauswirft und weil es konstruktiv vorteilhaft ist, beide Umhüllvorrichtungen, d. h. für Netz und für Garn, möglichst nahe am Einführspalt anzuordnen. Aus der US 4,174,661 ist eine Rundballenpresse bekannt, bei der Bindegarn durch den Spalt zwischen einer Riemenumlenkwalze und einer dem Pressraum abgewandten Starterwalze zugeführt wird. Nachteilig ist hierbei, dass die Starterwalze keine Pressarbeit verrichten kann. Einen ähnlichen Nachteil besitzt auch die Lösung der DE 3617155 C1.

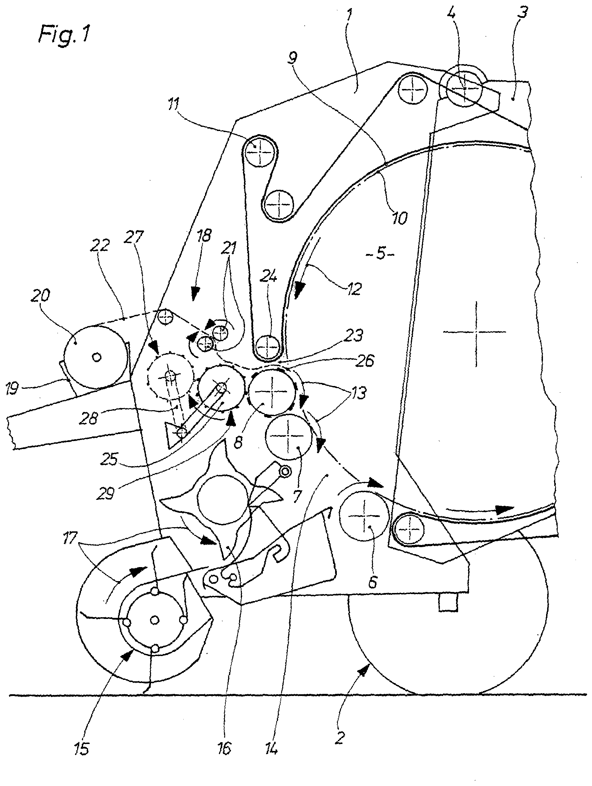

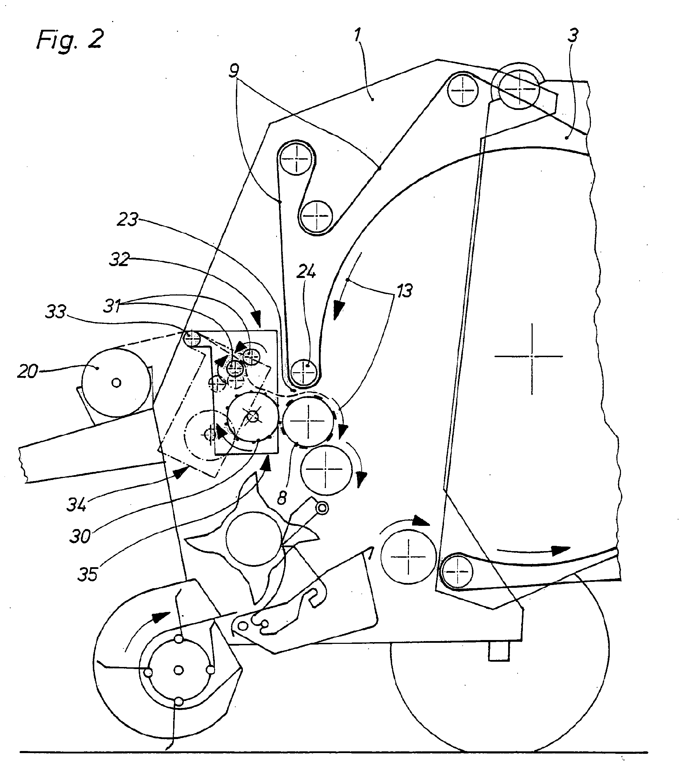

In US 5,129,207 wird eine Rundballenpresse 10 mit variabler Kammer (variable chamber round baler 10) beschrieben, vgl. Fig. 1. Mehrere endlose Pressriemen (sideby-side endless belts 12) umgeben eine Presskammer (bale-forming chamber). Der Rundballen 14 in der Presskammer wird in Umhüllmaterial (wrap material 39) eingewickelt. Ein paar von Vorzugswalzen (pair of pinch rollers 62 and 64) ziehen das Umhüllmaterial 39 von einer Vorratsrolle (supply roll 40) ab, vgl. Fig. 2. Das Umhüllmaterial 39 wird weiterhin von einer Reihe von Förderbändern (conveying belts 88) zu einem Einführspalt transportiert. Die Förderbänder 88 sind um Walzen 82 bis 86 herumgeführt.

In DE 10045842 A1 wird eine Zuführeinrichtung für Netz- oder Folienbahnen zum Umwickeln von Rundballen in einer Rundballenpresse beschrieben. Eine Netz- oder Folienbahn 2 wird um mehrere Führungswalzen 4 herumgeführt und von einer Vorratsrolle 5 abgezogen. Mit der Bahn 2 wird ein Ballen 3 umwickelt, vgl. Fig. 1. Die Bahn 2 wird hierbei durch einen Spalt zwischen einer angetriebenen Führungswalze 4 und einer Rückwalze 4' hindurchgeführt.

Der Erfindung liegt die Aufgabe zugrunde, Materialansammlungen im Bereich der Umhüllvorrichtungen zu vermeiden und eine störungsfreie Zuführung der Umhüllmaterialien in den Pressraum mit einfachen Mitteln sicherzustellen.

Diese Aufgabe wird erfindungsgemäß dadurch gelöst, dass die Drehrichtung der Umhüllmaterial zuführenden Förderwalze oder des zuführenden Förderbands umgekehrt werden kann.

Durch die umkehrbare Drehrichtung wird der Selbstreinigungseffekt unterstützt.

In einer Ausführungsform ist/ sind ein oder mehrere Zufuhrelement/e und/oder die Umhüllvorrichtung ganz oder teilweise abstandsveränderbar zum Einführspalt angeordnet. Durch diese abstandsveränderbare Anordnung wird ein nach unten offener, großer Spalt geschaffen, durch den das Material nach unten auf den Aufsammler fällt, anstatt sich abzusetzen.

Eine besonders vorteilhafte Ausführungsform besteht darin, dass das Zuführelement und/oder die Umhüllvorrichtung während des Pressvorganges des Rundballens einen größeren Abstand zum Einführspalt einnimmt/einnehmen als wahrend des Umhüllvorganges. Aufgewirbelte Materialteilchen fallen dadurch wahrend des zeitlich längeren Pressvorganges nach unten aus dem kritischen Bereich. Während der relativ kurzen Umhüllzeit können sich bei unterbrochenem Pressbetrieb keine Materialansammlungen bilden. Eine ungehinderte Zuführung des Umhüllmaterials ist somit gewährleistet.

Im Rahmen der Erfindung als vorteilhaft erkannte Ausführungsformen zur Vermeidung von Materialansammlungen sind in den Unteransprüchen gekennzeichnet.

In den Figuren sind einige Beispiele des Erfindungsgegenstandes dargestellt. Hierbei zeigt
Fig. 1 in Seitenansicht eine Rundballenpresse nach der Erfindung mit in Volllinie dargestellter Zuführwalze während des Starts des Umhüllvorganges und in Strichlinie gezeichneter, weggeschwenkter Zuführwalze während des Pressvorganges, wobei ein Teil des Hintergehäuses weggeschnitten ist.
Fig. 2 eine Ansicht nach Figur 1 auf eine zweite Ausführungsform der Erfindung, bei der die Zuführwalze und die Umhüllvorrichtung als eine insgesamt verschwenkbare Baueinheit ausgebildet sind und
Fig. 3 eine Ansicht nach Figur 1 auf eine dritte Ausführungsform der Erfindung, bei der die Zuführwalze und die Umhüllvorrichtung als insgesamt verschiebbare Baueinheit ausgebildet sind.

Die Rundballenpresse besitzt ein zweiteiliges Pressengehäuse, bestehend aus einem Vordergehäuse 1, welches gestellfest auf einem Fahrgestell 2 ruht, und einem Hintergehäuse 3, welches um eine obere Drehachse 4 zum Ballenausstoß in eine nicht gezeigte Entladestellung aufklappbar ist.

Im Pressengehäuse wird ein Pressraum 5, dessen Durchmesser sich in diesem Ausführungsbeispiel vergrößern kann, von drei antreibbaren, im Vordergehäuse 1 ortsfest aber drehbar angeordneten Presswalzen 6, 7, 8 und von Förder- und Pressriemen 9 gebildet, welche während der Formung eines in Figur 1 in Strichpunktlinien angedeuteten Ballens 10 auf Führungs- oder Umlenkrollen 11 umlaufen und den in Figur 1 dargestellten Verlauf einnehmen. Die gemeinsame Umlaufrichtung der Presswalzen 6, 7, 8 und der Förder- und Pressriemen 9 ist durch Pfeile 12, 13 gekennzeichnet.

Zwischen den beiden Presswalzen 6, 7 ist eine Zuführöffnung 14 für Halmgut freigelassen. Der Zuführöffnung ist ein an sich bekannter Aufsammler 15 mit einem Förder-/Schneidrotor 16 vorgeschaltet, die beide während des Betriebes in durch Pfeile 17 gekennzeichnete Richtungen bewegt werden. Anstelle eines variablen Pressraumes kann im Rahmen der Erfindung auch ein konstanter Pressraum zur Anwendung kommen, z. B. mit Presswalzen oder einem Stabkettenförderer.

Oberhalb des Förder- und Schneidrotors 16 ist eine Umhüllvorrichtung 18 angeordnet, bestehend im wesentlichen aus einem im Vordergehäuse **1** angeordneten Vorratsbehälter 19 für eine Umhüllmaterialrolle 20, z. B. Netz oder Folie und zwei ebenfalls im Vordergehäuse **1** gelagerten, antreibbaren Vorzugswalzen 21 zwischen denen das Umhüllmaterial 22 gehalten und geführt wird. Wenigstens eine Vorzugswalze ist, wie bekannt, zum Transport des Umhüllmaterials in den Pressraum 5 solange antreibbar, bis das Umhüllmaterial 22 von dem umlaufenden Pressballen **1**0 mitgenommen bzw. eingezogen wird.

Die Vorzugswalzen sind außerhalb des Pressraumes 5 benachbart zu einem Einführspalt 23 für das Umhüllmaterial angeordnet, der zwischen einer Umlenkwalze 24 für die Riemen 9 und der darunter angeordneten Presswalze 8 liegt. Der Presswalze 8 ist eine im Vordergehäuse 1 gelagerte Zuführwalze 25 vorgelagert, die in gleicher Drehrichtung wie die Presswalze 8 antreibbar ist, um während des Starts des Umhüllvorganges das freie Vorlaufende 26 des Umhüllmaterials in Richtung des Einführspaltes 23 des Umhüllmaterials 22 zu transportieren, wie in Figur 1 ersichtlich.

Neu ist die schwenkbare Anordnung der Zuführwalze 25, die während des Pressbetriebes eine in Strichlinie dargestellte Position 27 einnimmt und dadurch einen großen, nach unten offenen Spalt zwischen sich und der Presswalze 8 bildet, durch den Erntegutteilchen, die sich beim Stand der Technik oberhalb der Zuführ- und Presswalze 8 anhäufen, nach unten auf den Aufsammler 15 fallen und mit eingepresst werden. Die Zuführwalze 25 ist an einem Schwenkhebel 28 angeordnet und durch nicht dargestellte geeignete Antriebe beispielsweise beim Öffnen des Hintergehäuses 3 aus einer in Volllinie gezeigten Position 29 in die in Strichlinie gezeigte Position 27 bewegbar. Kurz vor Start des Umhüllvorganges wird die Zuführwalze 25 jeweils in die in Volllinie gezeichnete Position 29 eingebracht. Alternativ oder zusätzlich kann eine exzentrische Lagerung der Walzen 8, 25 vorgesehen sein, um den Selbstreinigungseffekt zu unterstützen. Anstelle einer Schwenkbewegung kann die Zuführwalze 25 auch beispielsweise auf geradlinigen Führungen verschiebbar sein. Lösungsgemäß kann auch die Drehrichtung der Zuführwalze 25 umgekehrt werden, um den Selbstreinigungseffekt zu unterstützen.

Die Funktionsweise der Rundballenpresse ist wie folgt: Während des Pressbetriebes nimmt die Zuführwalze 25 die in Figur 1 dargestellte, gestrichelt gezeichnete Position 27 ein. Dadurch kann Kleinmaterial, das vom Riemen 9 durch den Einführspalt nach außen gefordert wird und Material, das durch die Spalte zwischen den Riemen auf deren Leertrumseite nach unten fällt, sich nicht mehr auf der Zuführwalze 25, der Presswalze 8 und/oder auf der Umhüllvorrichtung 18 absetzen, weil es durch den Spalt nach unten auf den Aufsammler 15 fällt. Ist der gewünschte Ballendurchmesser oder der gewünschte Pressdruck erreicht, wird vor Auslösung der Umhüllvorrichtung 18 die Zuführwalze 25 in die in Volllinie gezeichnete Position 29 geschwenkt. Durch Antrieb der Vorzugswalzen 21 transportieren diese das freie Vorlaufende 26 des Umhüllmaterials 22 auf die Zuführwalze 25 und die Presswalze 8, welche es sicher und ungehindert in und durch den Einführspalt fordern, wo es in bekannter Weise vom umlaufenden Ballen 10 mitgenommen wird.

Bei dem in Figur 2 dargestellten Ausführungsbeispiel ist die Zuführwalze 30 mit dem Vorzugswalzenpaar 31 konstruktiv zu einer Baueinheit 32 zusammengefasst und um eine gemeinsame Schwenkachse 33 schwenkbar. Während des Pressbetriebes befindet sich diese Baueinheit 32 in gestrichelt gezeichneter Position 34 und bildet mit der Presswalze 8 eine nach unten offene Durchtrittsöffnung für Materialreste. Ist der Enddurchmesser des Ballens oder der Soll-Pressdruck im Pressraum 5 erreicht, schwenkt eine nicht dargestellte Stelleinrichtung die Baueinheit 32 in die in Volllinie gezeichnete Position 35. Bereits während der Öffnung des Hintergehäuses 3 zum Ballenausstoß oder beim Schließen kann die Baueinheit 32 über eine mechanische Verbindung mit dem Hintergehäuse 3 oder eine andere geeignete Stelleinrichtung in die in Strichlinie gezeichnete Position 34 bewegt werden. Diese Bauart hat den Vorteil, dass nunmehr selbst größere Gutansammlungen bis über die Umhüllvorrichtung sicher vermieden werden.

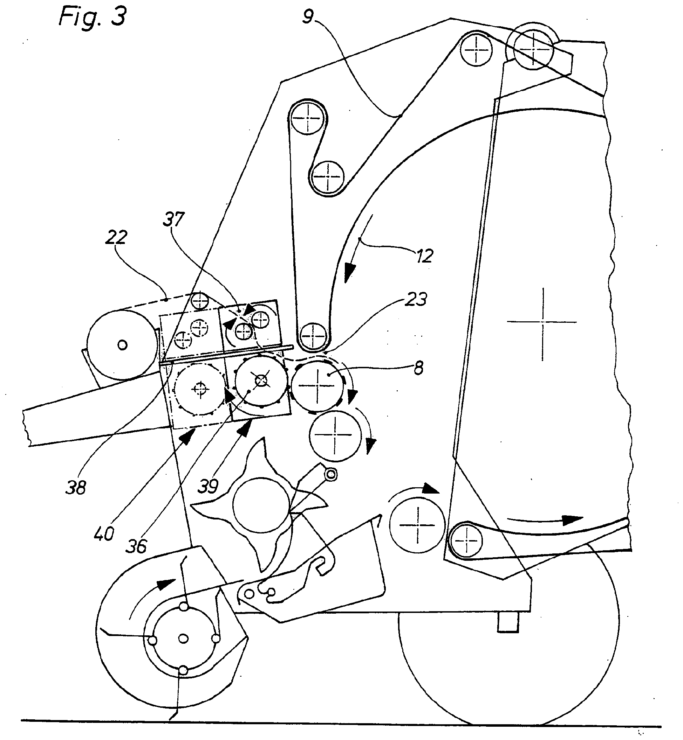

Anstelle der Verschwenkung kann für die Abstandsveränderung zwischen einer Zuführwalze und einer Presswalze eine Verschiebung der Zuführwalze allein oder in Verbindung mit der Umhüllvorrichtung vorgesehen sein. Wie in Figur 3 dargestellt, sind Zuführwalze 36 und Umhüllvorrichtung 37 auf einer ortsfesten Schiebeführung 38 verschiebbar gelagert und in den in Volllinie 39 bzw. Strichlinie 40 gezeichneten Endstellungen durch nicht dargestellte Verriegelungen arretierbar. Die in Volllinie gezeichnete Position 39 bezieht sich auf den Pressbetrieb.

Im Rahmen der Erfindung können als Umhüllvorrichtung sowohl Netz- und/oder Folienbindeeinrichtungen verwendet werden, deren Aufbau und Wirkungsweise beispielsweise in der DE 3418681 C1 näher erläutert ist, als auch mit Bindegarn arbeitende Bindeeinrichtungen gemäß DE 2645762 C1.

## Patentansprüche

1. Rundballenpresse, deren Pressraum (5) umfangsseitig durch umlaufende Presselemente (6 bis 9) gebildet wird, mit wenigstens einer ein Vorzugswalzenpaar (21, 31) aufweisenden Umhüllvorrichtung (18, 31, 37) zum Umhüllen eines Rundballens mit Umhüllmaterial (22), das mittels wenigstens eines weiteren antreibbaren Zuführelementes (25, 30, 36) durch einen Einführspalt (23) im Pressraum (5) in diesen einführbar ist, **dadurch gekennzeichnet, dass** das Zuführelement (25) eine Förderwalze oder ein Förderband ist und die Drehrichtung dieser Förderwalze oder dieses Förderbands (25) umgekehrt werden kann.

2. Rundballenpresse nach Anspruch 1, **dadurch gekennzeichnet,**
**dass** ein oder mehrere Zuführelement/e (25, 30, 36) und/oder die
Umhüllvorrichtung (18, 31, 37) ganz oder teilweise abstandsveränderbar zum Einführspalt (23) angeordnet ist/sind.

3. Rundballenpresse nach Anspruch 2, **dadurch gekennzeichnet,**
**dass** das Zuführelement (25, 30, 36) und/oder die Umhüllvorrichtung (18, 31, 37) während des Pressvorgangs des Rundballens (10) einen größeren Abstand zum Presselement (8) einnimmt/einnehmen als während des Umhüllvorganges.

4. Rundballenpresse nach Anspruch 2 oder 3, **dadurch gekennzeichnet, dass** das Zuführelement (25) dreh-, schieb- und/oder
schwenkbar gelagert ist.

5. Rundballenpresse nach Anspruch 2 oder 3, **dadurch gekennzeichnet, dass** die Umhüllvorrichtung dreh-, schieb- und/oder schwenkbar gelagert ist.

6. Rundballenpresse nach Anspruch 2 oder 3, **dadurch gekennzeichnet, dass** die Umhüllvorrichtung (31, 37) und das Zuführelement (30, 36) dreh-, schieb- und/oder schwenkbar gelagert sind.

7. Rundballenpresse nach einem oder mehreren der Ansprüche 2 bis 6, **dadurch gekennzeichnet, dass** der Abstand in Abhängigkeit von der Stellung eines aufklappbaren Pressraumgehäuseteiles (3) veränderbar ist.

8. Rundballenpresse nach einem oder mehreren der Ansprüche 2 bis 7, **dadurch gekennzeichnet, dass** der Abstand in Abhängigkeit vom Pressdruck im Pressraum (5) oder vom Ballendurchmesser veränderbar ist.

9. Rundballenpresse nach einem oder mehreren der Ansprüche 2 bis 8, **dadurch gekennzeichnet, dass** der Abstand in Abhängigkeit vom Antriebsdrehmoment der Presse oder der Presselemente (6 bis 9) veränderbar ist.

10. Rundballenpresse nach einem oder mehreren der Ansprüche 2 bis 9, **dadurch gekennzeichnet, dass** der Abstand in Abhängigkeit von der Betätigung der Umhüllvorrichtung (18, 31, 37) veränderbar ist.

11. Rundballenpresse nach einem oder mehreren der vorhergehenden Ansprüche, **dadurch gekennzeichnet, dass** dem Zuführelement (25, 30, 36) und/oder der Umhüllvorrichtung (18,31, 37) zusätzlich ein Reinigungselement zugeordnet ist/sind.

12. Rundballenpresse nach einem oder mehreren der vorhergehenden Ansprüche, **dadurch gekennzeichnet, dass** die Umhüllvorrichtung ein oder mehrere Garnleitorgan/e für Bindegarn als Umhüllmaterial aufweist.

## Claims

1. A round baler, whose bale chamber (5) is formed circumferentially by circumferential compression elements (6 to 9), having at least one wrapping device (18, 31, 37) having a pair of preferred rollers (21, 31) for wrapping a round bale with wrapping material (22) which can be introduced into the latter by means of at least one further drivable feeding element (25, 30, 36) through an insertion gap (23) in the baling chamber (5), **characterised in that** the feeding element (25) is a conveyor roller or a conveyor belt and the direction of rotation of said conveyor roller or belt (25) can be reversed.

2. Round baler according to Claim 1, **characterised in that** one or more feeding elements (25, 30, 36) and/or the wrapping device (18, 31, 37) is/are arranged so as to be completely or partially variable in distance from the insertion gap (23).

3. Round baler according to Claim 2, **characterised in that** the feeding element (25, 30, 36) and/or the wrapping device (18, 31, 37) occupies/occupy a greater distance from the compression element (8) during the compression of the round bale (10) than during the wrapping operation.

4. Round baler according to Claim 2 or 3, **characterised in that** the feeding element (25) is mounted so as to be rotatable, slidable and/or pivotable.

5. Round baler according to Claim 2 or 3, **characterised in that** the wrapping device is mounted so as to be rotatable, slidable and/or pivotable.

6. Round baler according to Claim 2 or 3, **characterised in that** the wrapping device (31, 37) and the feeding element (30, 36) are mounted so as to be rotatable, slidable and/or pivotable.

7. Round baler according to one or more of Claims 2 to 6, **characterised in that** the distance is variable as a function of the position of a hinged bale chamber housing section (3).

8. Round baler according to one or more of Claims 2 to 7, **characterised in that** the distance is variable as a function of the compression pressure in the bale chamber (5) or of the bale diameter.

9. Round baler according to one or more of Claims 2 to 8, **characterised in that** the distance is variable as a function of the drive torque of the compressor or the compressor elements (6 to 9).

10. Round baler according to one or more of Claims 2 to 9, **characterised in that** the distance is variable as a function of the actuation of the wrapping device (18, 31, 37).

11. Round baler according to one or more of the preceding claims, **characterised in that** a cleaning element is/are additionally associated with the feeding element (25, 30, 36) and/or the wrapping device (18, 31, 37).

12. Round baler according to one or more of the preceding claims, **characterised in that** the wrapping device comprises one or more twine guiding member(s) for binding twine as a wrapping material.

## Revendications

1. Presse à balles rondes, dont l'espace de compression (5) est formé côté périphérique par des éléments de compression (6 à 9) rotatifs, avec au moins un dispositif d'enveloppement (18, 31, 37) présentant une paire de rouleaux de traction (21, 31) pour envelopper une balle ronde avec un matériau d'enveloppement (22), qui peut être introduit au moyen d'au moins un autre élément d'amenée (25, 30, 36) pouvant être entraîné à travers une fente d'introduction (23) dans l'espace de compression (5) dans celui-ci, **caractérisée en ce que** l'élément d'amenée (25) est un rouleau de transport ou une bande transporteuse et le sens de rotation de ce rouleau de transport ou de cette bande transporteuse (25) peut être inversé.

2. Presse à balles rondes selon la revendication 1, **caractérisée en ce qu'**un ou plusieurs élément/s d'amenée (25, 30, 36) et/ou le dispositif d'enveloppement (18, 31, 37) est/sont agencé/s entièrement ou en partie modifiable/s en distance par rapport à la fente d'introduction (23).

3. Presse à balles rondes selon la revendication 2, **caractérisée en ce que** l'élément d'amenée (25, 30, 36) et/ou le dispositif d'enveloppement (18, 31, 37) adopte/adoptent une plus grande distance par rapport à l'élément de compression (8) pendant l'opération de compression de la balle ronde (10) que pendant l'opération d'enveloppement.

4. Presse à balles rondes selon la revendication 2 ou 3, **caractérisée en ce que** l'élément d'amenée (25) est logé de manière rotative, coulissante et/ou pivotante.

5. Presse à balles rondes selon la revendication 2 ou 3, **caractérisée en ce que** le dispositif d'enveloppement est logé de manière rotative, coulissante et/ou pivotante.

6. Presse à balles rondes selon la revendication 2 ou 3, **caractérisée en ce que** le dispositif d'enveloppement (31, 37) et l'élément d'amenée (30, 36) sont logés de manière rotative, coulissante et/ou pivotante.

7. Presse à balles rondes selon une ou plusieurs des revendications 2 à 6, **caractérisée en ce que** la distance est modifiable en fonction de la position d'une partie de boîtier d'espace de compression (3) rabattable.

8. Presse à balles rondes selon une ou plusieurs des revendications 2 à 7, **caractérisée en ce que** la distance est modifiable en fonction de la pression de compression dans l'espace de compression (5) ou du diamètre des balles.

9. Presse à balles rondes selon une ou plusieurs des revendications 2 à 8, **caractérisée en ce que** la distance est modifiable en fonction du couple d'entraînement de la presse ou des éléments de compression (6 à 9).

10. Presse à balles rondes selon une ou plusieurs des revendications 2 à 9, **caractérisée en ce que** la distance est modifiable en fonction de l'actionnement du dispositif d'enveloppement (18, 31, 37).

11. Presse à balles rondes selon une ou plusieurs des revendications précédentes, **caractérisée en ce qu'**un élément de nettoyage est affecté en plus à l'élément d'amenée (25, 30, 36) et/ou au dispositif d'enveloppement (18, 31, 37).

12. Presse à balles rondes selon une ou plusieurs des revendications précédentes, **caractérisée en ce que** le dispositif d'enveloppement présente un ou plusieurs organe/s de guidage de fil pour ficelle en tant que matériau d'enveloppement.
